# EUROPÄISCHE PATENTSCHRIFT

(11) **EP 1 880 943 B1**
(45) Veröffentlichungstag und Bekanntmachung des Hinweises auf die Patenterteilung: **10.09.2008**
(21) Anmeldenummer: 07009453.7
(22) Anmeldetag: 11.05.2007
(51) Int. Cl.: B65B 9/04, B65B 41/18, B65B 57/04

(54) **Vorrichtung zum Siegeln einer Näpfe aufweisenden Formfolie mit einer Deckfolie**
Device for sealing a moulded film with cups using a cover film
Dispositif pour sceller une bande comportant des éléments en forme de godets avec une feuille de couverture

(30) Priorität: 21.07.2006 DE 102006033782
(43) Veröffentlichungstag der Anmeldung: 23.01.2008
(73) Patentinhaber: UHLMANN PAC-SYSTEME GmbH & Co. KG, 88471 Laupheim (DE)
(72) Erfinder: Rodi, Wolfgang, 88471 Baustetten (DE)
(74) Vertreter: Hentrich, Swen

(56) Entgegenhaltungen:
- DE-A1-9102004 012 44
- GB-A- 2 184 086

## Beschreibung

Die Erfindung betrifft eine Vorrichtung zum Siegeln einer, vorzugsweise befüllte Näpfe aufweisenden Formfolie mit einer Deckfolie, mit einer mittels eines Walzenantriebes antreibbaren, in ihrer Umfangsfläche Vertiefungen für die Näpfe aufweisenden Gegenwalze und einer darauf ablaufenden Siegelwalze, zwischen denen hindurch die mittels eines Folienantriebes bewegbaren Formfolie und Deckfolie durchführbar sind, und mit einem Regelsystem zur Regelung der Lage mindestens eines Napfes zu der ihm zugeordneten Vertiefung der Gegenwalze, das als Teil zur Anpassung der Drehgeschwindigkeit der Gegenwalze den Walzenantrieb und einen Sensor zur Erfassung der Lage mindestens dieses Napfes aufweist.

Eine derartige Vorrichtung ist aus der DE 10 2004 012 449 A1 bekannt. Diese Vorrichtung hat sich in der Praxis gut bewährt, insbesondere während des kontinuierlichen Produktionsprozesses. Zu beachten ist allerdings, dass in den Start- und Stoppphasen aufgrund des unterschiedlichen Dehnverhaltens der Formfolie, das von verschienen Faktoren wie Temperatur, Druck, Foliengeschwindigkeit und Folienmaterial abhängt, das das Regelsystem sehr stark belastet wird, weil durch die Dehnung der Formfolie der Teilungsabstand der Vertiefungen in der Gegenwalze nicht mehr mit dem Teilungsabstand der Näpfe in der Formfolie übereinstimmt.

Der Erfindung liegt daher die Aufgabe zugrunde, eine Vorrichtung der eingangs genannten Art so auszubilden, dass auch beim Starten und Stoppen des Vorschubs der zwischen der Gegenwalze und der Siegelwalze durchgeführten Formfolie und Deckfolie eine ausreichende Synchronizität zwischen den Vertiefungen und den Näpfen sichergestellt werden kann.

Diese Aufgabe wird nach der Erfindung in einer Vorrichtung der eingangs genannten Art dadurch gelöst, dass stromauf vor der Gegenwalze und der Siegelwalze ein Zangenvorschub mit zwei die Formfolie randseitig umgreifenden Vorschubzangen angeordnet ist, die im geschlossenen Zustand zum Vorschieben der Formfolie mit der Foliengeschwindigkeit vorgesehen sind.

Mit dieser Gestaltung der erfindungsgemäßen Vorrichtung ist der Vorteil verbunden, dass unmittelbar vor dem Walzenpaar ein mit der gewünschten Foliengeschwindigkeit erfolgender Vorschub stattfindet aufgrund des stromauf der Gegenwalze und Siegelwalze vorgelagerten Zangenvorschubs, so dass auch beispielsweise beim Start einer die Vorrichtung zum Siegeln integrierenden Thermoformmaschine mit dem zugeordneten Folienvorschub eine Längung dieser Formfolie ausgeglichen werden kann, die aus einer Erwärmung der Formfolie in der Siegelvorrichtung sowie der erhöhten Zugspannung herrührt.

Ganz besonders bevorzugt im Rahmen der Erfindung ist es, wenn der Vorschubzange ein Antriebsmotor mit einer Antriebswelle zugeordnet ist, auf der mittels eines ersten Exzenters eine Hauptkurbel und mittels eines zweiten Exzenters eine Steuerkurbel angeordnet sind, wenn mittels der Hauptkurbel auf einer Linearführung eine Steuerstange reversierend zur Folienvorschubrichtung verstellbar ist, und wenn auf der mittels der Steuerkurbel verschwenkbaren Steuerstange mindestens ein Steuerkurventräger zum Öffnen und Schliessen der Vorschubzange angeordnet ist. Durch diese Gestaltung wird bei einem platzsparenden Aufbau die erforderliche reversierende Bewegung der Vorschubzange erzeugt, wobei die Hauptkurbel die Bewegung der Vorschubzange parallel und antiparallel zur Formfolie generiert, während über die Steuerkurbel das Öffnen und Schliessen der Vorschubzange bewirkt. Die dabei erforderliche Abstimmung der Bewegungen parallel und senkrecht zur Vorschubrichtung der Formfolie wird zwangsweise über die der Hauptkurbel und der Steuerkurbel gemeinsame Antriebswelle erreicht. Vorteilthaft ist es außerdem, wenn die Steuerkurve mit einem dritten Exzenter mit der Steuerstange verbunden ist, da so in einfacher Weise die Möglichkeit besteht, den Drehsinn der reversierenden Bewegungen der Vorschubzange dem Drehsinn der Antriebswelle anzupassen.

Im Rahmen der Erfindung ist weiterhin vorgesehen, dass jede Vorschubzange einen auf der Linearführung angeordneten, eine Zangenbacke bildenden Grundkörper sowie eine in dem Grundkörper senkrecht zur Ebene der Formfolie linear verstellbar geführte Klemmbacke aufweist. Die Positionierung des Grundkörpers auf der Linearführung stellt eine genaue Ausrichtung der Zangenbacken relativ zu der Formfolie sicher, wobei die Zangenbacken eine ausreichende Ausdehnung in Vorschubrichtung der Formfolie aufweisen können, so dass eine unzureichende Linienberühung vermieden ist. Der Grundkörper bietet sich dabei auch an zur Führung der Klemmbacke, so dass insgesamt bei einer Umdrehung der Antriebswelle eine genau definierte Trajektorie von den Klemmbacken durchlaufen wird. Besonders bevorzugt im Rahmen der Erfindung ist es, wenn die Vertiefungen im Umfang der Gegenwalze und deren Abwicklung einen größeren Abstand haben, als die Näpfe in der Formfolie. Mit dieser Gestaltung ist die Wirkung verbunden, dass in dem Regelsystem eine Korrektur der Lage der Vertiefungen nur bewirkt wird, indem die Gegenwalze in ihrem üblichen Drehsinn stärker beschleunigt wird. Es ist also nicht erforderlich, den Drehsinn der Gegenwalze umzukehren, so dass die damit verbundene stärkere Belastung der Formfolie vermieden ist.

Besonders bevorzugt ist es weiterhin im Rahmen der Erfindung, wenn der Walzenantrieb mit dem Zangenvorschub synchronisiert ist zur Korrektur der Lage der Vertiefungen nur bei geschlossenen Vorschubzangen. Dadurch ist erreicht, dass die Korrektur der Lage der Vertiefungen nur erfolgt, wenn die damit auftretende stärkere Belastung der Formfolie lokal begrenzt ist auf den Bereich zwischen der Anlagelinie zwischen der Siegelwalze und der Gegenwalze sowie dem Zangenvorschub.

Im folgenden wird die Erfindung an einem in der Zeichnung dargestellten Ausführungsbeispiel näher erläutert; es zeigen:

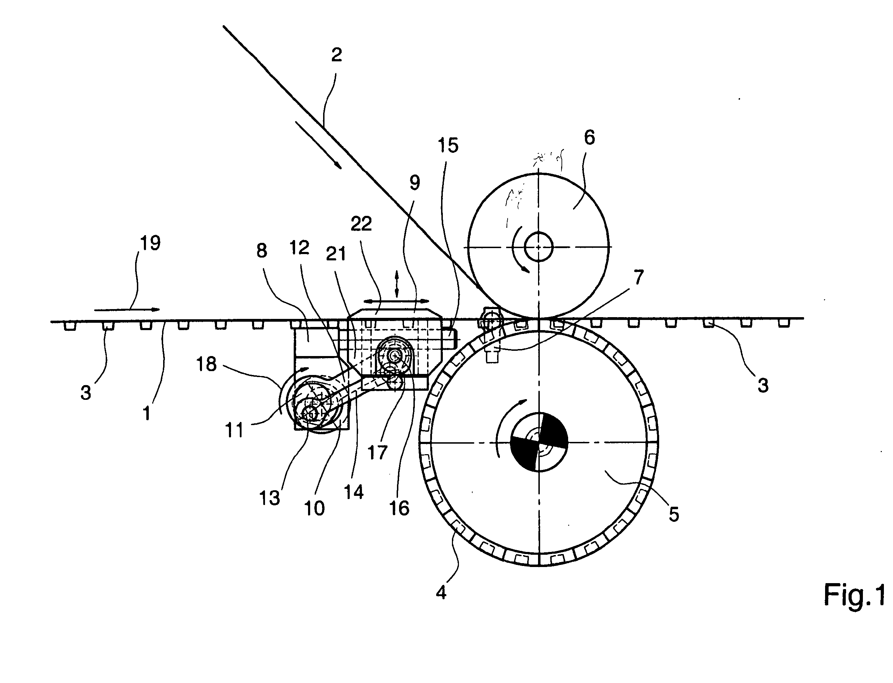

- Fig. 1: in einer Seitenansicht eine schematische Darstellung einer erfindungsgemäßen Vorrichtung,
- Fig. 2: eine perspektivische Darstellung des Gegenstandes der Fig. 1, und
- Fig. 3: eine perspektivische, isolierte Darstellung des Zangenvorschubs, zur besseren Übersicht ohne den Grundkörper der Vorschubzange dargestellt.

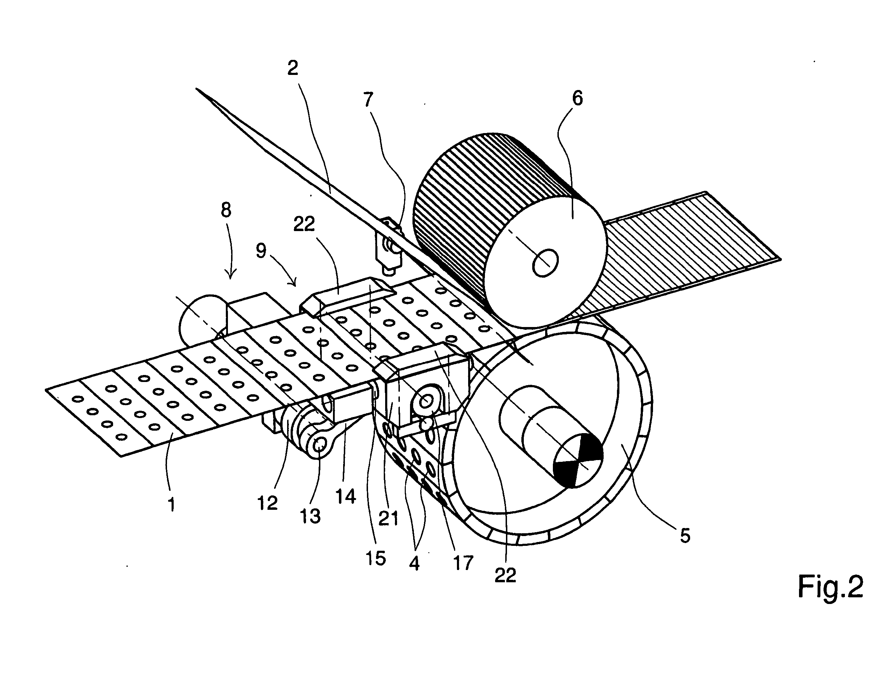

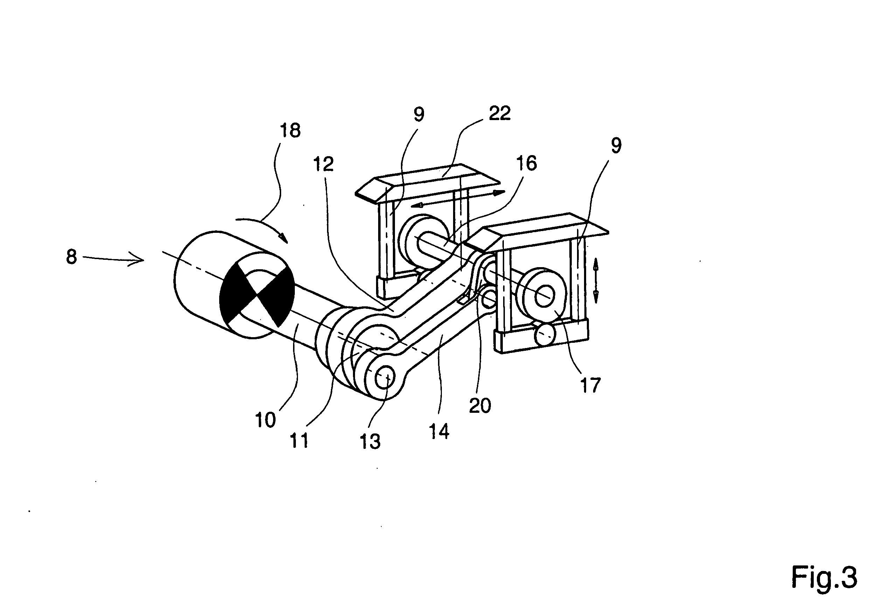

In der Zeichnung ist eine Vorrichtung zum Siegeln einer befüllte Näpfe 3 aufweisenden Formfolie 1 mit einer Deckfolie 2 gezeigt, wie diese beispielsweise insbesondere in Thermoformmaschinen zum Verpacken pharmazeutischer Produkte in Blisterpackungen Verwendung findet. In dieser Thermoformmaschine werden in einer der Vorrichtung zum Siegeln vorgelagerten Formstation die in der Formfolie 1 erforderlichen Näpfe 3 ausgebildet, die in einer Füllstation mit Produkten gefüllt werden. Die erfindungsgemäße Vorrichtung zum Siegeln hat die Aufgabe, zwischen der Formfolie 1 und der Deckfolie 2 eine luft- bzw. druckdichte Verbindung herzustellen, um die in den Näpfen 3 angeordneten Produkte zu schützen. Bei dem Siegeln wirken Druck und Temperatur auf die Formfolie 1 und die Siegelfolie 2 ein, so dass sichergestellt sein muss, dass die Produkte während des Siegelvorganges keinen Schaden nehmen. Dazu besitzt die erfindungsgemäße Vorrichtung folgenden Aufbau. Die Vorrichtung umfasst eine mittels eines Walzenantriebes antreibbare, in ihrer Umfangsfläche Vertiefungen 4 für die Näpfe 3 aufweisende Gegenwalze 5 und eine darauf ablaufende Siegelwalze 6, zwischen denen hindurch die mittels eines, in der Regel der Thermoformmaschine zugeordneten, Folienantriebes bewegbaren Formfolie 1 und Deckfolie 2 durchführbar sind. Die Vorrichtung umfasst weiterhin ein Regelsystem zur Regelung der Lage mindestens eines Napfes 3 zu der ihm zugeordneten Vertiefung 4 der Gegenwalze 5, das als Teil zur Anpassung der Drehgeschwindigkeit der Gegenwalze 5 den Walzenantrieb und einen Sensor 7 zur Erfassung der Lage mindestens dieses Napfes 3 aufweist, so dass aufgrund dieses Regelsystems sichergestellt werden kann, dass die Näpfe 3 möglichst zentrisch, also mit ausreichendem Abstand zu dem Rand der Vertiefungen 4 in diese Vertiefungen 4 eingreifen. Dieses Regelsystem arbeitet sehr gut während des Dauerbetriebes, also während der kontinuierlich laufenden Formfolie 1, während aufgrund der Variation von den Siegelprozess bestimmende Parametern beim Starten und Stoppen des Folienantriebes sowie der Vorrichtung zum Siegeln Probleme auftreten, insbesondere, wenn aufgrund einer Temperaturerhöhung oder der gesteigerten Zugkraft eine Längung der Formfolie 1 auftritt und der Teilungsabstand der Näpfe 3 nicht mehr mit dem Abstand der Vertiefungen 4 im Umfang der Gegenwalze 5 übereinstimmt, also das Regelsystem größere Abweichungen ausgleichen muss. Um dem Regelsystem diese Aufgabe zu erleichtern, umfasst die erfindungsgemäße Vorrichtung stromauf vor der Gegenwalze 5 und der Siegelwalze 6 einen Zangenvorschub 8 mit zwei die Formfolie 1 randseitig umgreifenden Vorschubzangen 9, die im geschlossenen Zustand zum Vorschieben der Formfolie 1 mit der Foliengeschwindigkeit vorgesehen sind. Befindet sich nämlich die Formfolie 1 vor dem Start der erfindungsgemäßen Vorrichtung auf Raumtemperatur mit einer vorgegebenen Zugspannung, tritt beim Start des Folienantriebes und dem Beheizen der Siegelwalze 6 in der stromab zu der Siegelwalze 6 und der Gegenwalze 5 liegenden Formfolie 1 eine Längung auf, die bei konstant laufendem Folienantrieb dazu führt, dass die Formfolie 1 stromauf zur Gegenwalze nicht mit der erforderlichen Geschwindigkeit vorgeschoben wird. Dem hilft nunmehr der Zangenvorschub 8 ab, der mit der erforderlichen Foliengeschwindigkeit die Formfolie 1 der Vorrichtung zum Siegeln zwischen der Siegelwalze 6 und der Gegenwalze 5 zuführt. Dabei ist dem Zangenvorschub 8 ein Antriebsmotor mit einer Antriebswelle 10 zugeordnet, auf der mittels eines ersten Exzenters 11 eine Hauptkurbel 12 und mittels eines zweiten Exzenters 13 eine Steuerkurbel 14 angeordnet sind. Dabei ist mittels der Hauptkurbel 12 auf einer Linearführung 15 reversierend eine Steuerstange 16 zur Folienvorschubrichtung verstellbar. Auf der mittels der Steuerkurbel 14 verschwenkbaren Steuerstange 16 ist mindestens ein Steuerkurventräger 17 zum Öffnen und Schliessen der Vorschubzangen 9 angeordnet, wobei bei dem in der Zeichnung dargestellten Ausführungsbeispiel (Fig. 3) jeder Vorschubzange 9 ein eigener Steuerkurventräger 17 zugeordnet ist. Bei dem in der Zeichnung dargestellten Ausführungsbeispiel wird die Antriebswelle 10 im Uhrzeigersinn (Pfeil 18) angetrieben, während für die reversierende Bewegung der Vorschubzangen 9 eine Bewegung mit entgegengesetztem Drehsinn erforderlich ist, damit beim Rücklauf der Vorschubzangen 9 entgegen der Vorschubrichtung (Pfeil 19) die Vorschubzangen 9 geöffnet sind, während bei der Bewegung in Vorschubrichtung durch das Schliessen der Vorschubzangen 9 die Klemmung erfolgt. Dieser gewünschte Drehsinn wird in einfacher Weise erzielt, indem die Steuerkurbel 14 mittels eines dritten Exzenters 20 mit der Steuerstange 16 verbunden ist auf der der Antriebswelle 10 zugeordneten Seite. Fig. 2 läßt weiterhin erkennen, dass jede Vorschubzange 9 einen auf der Linearführung 15 angeordneten, eine Zangenbacke bildenden Grundkörper 21 sowie eine in dem Grundkörper 21 senkrecht zur Ebene der Formfolie 1 linear verstellbar geführte Klemmbacke 22 aufweist. Zu beachten ist weiterhin, dass der Walzenantrieb mit dem Zangenvorschub 8 synchronisiert ist zu Korrektur der Lage der Vertiefungen 4 nur in der Betriebssituation, wenn die Vorschubzangen 9 geschlossen sind.

Außerdem ist zu beachten, dass die Vertiefungen 4 im Umfang der Gegenwalze 1 in deren Abwicklung einen größeren Abstand haben als die Näpfe 3 in der Formfolie 1, so dass eine Korrektur der Lage der Gegenwalze 5 immer nur mit dem identischen Drehsinn erfolgt, wobei diese Positionskorrektur in der Praxis durch eine kurze Geschwindigkeitssteigerung des Walzenantriebes ausgelöst wird, wenn ein entsprechender Bedarf besteht. Da der Unterschied in der Abstandsteilung der Vertiefungen 4 in der Gegenwalze 5 relativ zu den Näpfen 3 in der Formfolie 1 gering gewählt werden kann, um den gewünschten Effekt zur Vereinheitlichung des Drehsinnes zu erzielen, liegt dieser Bedarf selten vor, es ist also keine übermäßige Belastung des Walzenantriebes und der in der Vorrichtung verwendeten Bauteile durch einen ungleichförmigen Lauf des Walzenantriebes gegeben.

## Patentansprüche

1. Vorrichtung zum Siegeln einer, vorzugsweise befüllte Näpfe (3) aufweisenden Formfolie (1) mit einer Deckfolie (2), mit einer mittels eines Walzenantriebes antreibbaren, in ihrer Umfangsfläche Vertiefungen (4) für die Näpfe (3) aufweisenden Gegenwalze (5) und einer darauf ablaufenden Siegelwalze (6), zwischen denen hindurch die mittels eines Folienantriebes bewegbaren Formfolie (1) und Deckfolie (2) durchführbar sind, und mit einem Regelsystem zur Regelung der Lage mindestens eines Napfes (3) zu der ihm zugeordneten Vertiefung (4) der Gegenwalze (5), das als Teil zur Anpassung der Drehgeschwindigkeit der Gegenwalze (5) den Walzenantrieb und einen Sensor (7) zur Erfassung der Lage mindestens dieses Napfes (3) aufweist, **dadurch gekennzeichnet, dass** stromauf vor der Gegenwalze (5) und der Siegelwalze (6) ein Zangenvorschub (8) mit zwei die Formfolie (1) randseitig umgreifenden Vorschubzangen (9) angeordnet ist, die im geschlossenen Zustand zum Vorschieben der Formfolie (1) mit der Foliengeschwindigkeit vorgesehen sind.

2. Vorrichtung nach Anspruch 1, **dadurch gekennzeichnet, dass** dem Zangenvorschub (8) ein Antriebsmotor mit einer Antriebswelle (10) zugeordnet ist, auf der mittels eines ersten Exzenters (11) eine Hauptkurbel (12) und mittels eines zweiten Exzenters (13) eine Steuerkurbel (14) angeordnet sind, dass mittels der Hauptkurbel (12) auf einer Linearführung (15) eine Steuerstange (16) reversierend zur Folienvorschubrichtung verstellbar ist, und dass auf der mittels der Steuerkurbel (14) verschwenkbaren Steuerstange (16) mindestens ein Steuerkurventräger (17) zum Öffnen und Schliessen der Vorschubzangen (9) angeordnet ist.

3. Vorrichtung nach Anspruch 2, **dadurch gekennzeichnet, dass** die Steuerkurbel (14) mittels eines dritten Exzenters (20) mit der Steuerstange (16) verbunden ist.

4. Vorrichtung nach Anspruch 2 oder 3, **dadurch gekennzeichnet, dass** jede Vorschubzange (9) einen auf der Linearführung (15) angeordneten, eine Zangenbacke bildenden Grundkörper (21) sowie eine in dem Grundkörper (21) senkrecht zur Ebene der Formfolie (1) linear verstellbar geführte Klemmbacke (22) aufweist.

5. Vorrichtung nach einem der Ansprüche 1 bis 5, **dadurch gekennzeichnet, dass** die Vertiefungen (4) im Umfang der Gegenwalze (5) in deren Abwicklung einen größeren Abstand haben als die Näpfe (3) in der Formfolie (1).

6. Vorrichtung nach einem der Ansprüche 1 bis 5, **dadurch gekennzeichnet, dass** der Walzenantrieb mit dem Zangenvorschub (8) sychronisiert ist zur Korrektur der Lage der Vertiefungen (4) nur bei geschlossenen Vorschubzangen (9).

## Claims

1. Apparatus for sealing a shaped foil (1) having preferably filled cups (3) with a cover foil (2) comprising a backing roller (5) which is drivable by means of a roller drive and which in its peripheral surface has recesses (4) for the cups (3) and a sealing roller (6) which runs on the backing roller, the shaped foil (1) which is movable by means of a foil drive and the cover foil (2) being movable through between the rollers, and comprising a regulating system for regulating the position of at least one cup (3) relative to the recess (4) associated therewith in the backing roller (5) which as a portion for adaptation of the rotary speed of the backing roller (5) has the roller drive and a sensor (7) for detecting the position of at least said cup (3), **characterised in that** arranged upstream of the backing roller (5) and the sealing roller (6) is a gripper advance (8) having two advance grippers (9) which embrace the shaped foil (1) at the edges and which in the closed condition are provided for advancing the shaped foil (1) at the foil speed.

2. Apparatus according to claim 1 **characterised in that** associated with the gripper advance (8) is a drive motor having a drive shaft (10) on which a main crank (12) is arranged by means of a first eccentric (11) and a control crank (14) is arranged by means of a second eccentric (13), that a control rod (16) is displaceable in reversing relationship with respect to the foil advance direction by means of the main crank (12) on a linear guide (15) and that at least one control cam carrier (17) for opening and closing the advance grippers (9) is arranged on the control rod (16) which is pivotable by means of the control crank (14).

3. Apparatus according to claim 2 **characterised in that** the control crank (14) is connected to the control rod (16) by means of a third eccentric (20).

4. Apparatus according to claim 2 or claim 3 **characterised in that** each advance gripper (9) has a main body (21) arranged on the linear guide (15) and forming a gripper jaw and a clamping jaw (22) guided linearly displaceably in the main body (21) perpendicularly to the plane of the shaped foil (1).

5. Apparatus according to one of claims 1 to 5 **characterised in that** the recesses (4) in the periphery of the backing roller (5) in the development thereof are at a greater spacing than the cups (3) in the shaped foil (1).

6. Apparatus according to one of claims 1 to 5 **characterised in that** the roller drive is synchronised with the gripper advance (8) for correction of the position of the recesses (4) only when the advance grippers (9) are closed.

## Revendications

1. Dispositif pour sceller une bande moulée (1), comportant de préférence des godets (3) remplis, avec une feuille de couverture (2), et dans lequel :
- sur un cylindre d'opposition (5) qui peut être mû par un entraînement de cylindre et qui porte sur sa surface périphérique des cavités (4) pour les godets (3), roule un cylindre de scellement (6),
- entre les cylindres peuvent passer la bande moulée (1) qui peut être déplacée par un entraînement de bande, ainsi que la feuille de couverture (2),
- un système de régulation sert à régler la position d'au moins un godet (3) par rapport à la cavité (4) qui lui est associée dans le cylindre d'opposition (5), et ce système utilise l'entraînement de cylindre pour adapter la vitesse de rotation du cylindre d'opposition ainsi qu'un capteur pour détecter la position d'au moins ce godet (3),
ce dispositif étant **caractérisé en ce qu'**en amont du cylindre d'opposition (5) et du cylindre de scellement (6) est disposé un dispositif d'avancement à pinces (8) comportant deux pinces d'avancement (9) qui enveloppent les bords de la bande moulée (1) et qui, quand elles sont à l'état serré, sont dotées de la vitesse de cette bande moulée (1) pour faire avancer cette bande.

2. Dispositif selon la revendication 1, **caractérisé en ce qu'**
- au dispositif d'avancement à pinces (8) est associé un moteur d'entraînement et, sur l'arbre d'entraînement (10) de ce moteur, sont montées par un premier excentrique (11) une manivelle principale (12) et par un second excentrique (13) une manivelle de commande (14),
- par l'intermédiaire de la manivelle principale (12), une tige de commande (16) peut se déplacer en va et vient sur un guidage linéaire (15) dans la direction d'avancement de la bande,
- sur la tige de commande (16) qui peut basculer sous l'action de la manivelle de commande (14) est monté au moins un support de came de commande (17) servant à ouvrir et à fermer les pinces d'avancement (9).

3. Dispositif selon la revendication 2, **caractérisé en ce que** la manivelle de commande (14) est reliée à la tige de commande (16) par un troisième excentrique.

4. Dispositif selon la revendication 2 ou 3, **caractérisé en ce que** chaque pince d'avancement (9) présente un corps de base (21) qui est monté sur le guidage linéaire (15) et qui constitue une joue de pince, ainsi qu'une pince de serrage (22) qui peut coulisser dans le corps de base (21) perpendiculairement au plan de la bande moulée (1).

5. Dispositif selon une des revendications 1 à 4, **caractérisé en ce que** les cavités (4) disposées sur la périphérie du cylindre d'opposition (5) présentent sur le développement de celle-ci une distance plus grande que celle présentée par les godets (3) sur la bande moulée (1).

6. Dispositif selon une des revendications 1 à 5, **caractérisé en ce que** l'entraînement du cylindre est synchronisé avec le dispositif d'avancement à pinces (8) afin de corriger la position des cavités (4) seulement quand les pinces d'avancement (9) sont fermées.
